# EUROPÄISCHE PATENTANMELDUNG

(11) **EP 1 022 256 A2**
(43) Veröffentlichungstag der Anmeldung: **26.07.2000**
(21) Anmeldenummer: 00101003.2
(22) Anmeldetag: 19.01.2000
(51) Int. Cl.: C02F 1/30, C02F 1/48

(54) **Sauerstoff-Anreicherungsgerät für insbesondere Wasser und Verfahren zur Sauerstoff-Anreicherung von insbesondere Wasser**

(30) Priorität: 19.01.1999 DE 29900657 U; 04.02.1999 DE 29901941 U
(71) Anmelder: ECO Naturforschungs- und Technologie Gesellschaft mbH, 67259 Heuchelheim (DE)
(72) Erfinder: Korsch, Ingo, c/o ECO Naturforsch.-und Tech. Gmbh, 67259 Heuchelheim (DE)
(74) Vertreter: Kern, Ralf M., Dipl.-Ing.

(57) **Zusammenfassung**

Es handelt sich um ein Sauerstoff-Anreicherungsgerät für insbesondere Wasser und ein Sauerstoff-Anreicherungsverfahren für insbesondere Wasser. Bei dem Sauerstoff-Anreicherungsgerät ist eine Photonen-Quelle vorgesehen, welche das Wasser vor oder während der Einbringung von Sauerstoff in das Wasser mit Photonen bestrahlt. Das Verfahren beinhaltet das Bestrahlen des Wassers vor oder während der Einbringung von Sauerstoff mit Photonen.

## Beschreibung

Die Erfindung betrifft ein Sauerstoff-Anreicherungsgerät für insbesondere Wasser und ein Verfahren zur Sauerstoffanreichung von insbesondere Wasser

Welche Bedeutung dem Wasser für menschliche Gesundheit zukommt, haben bereits die Weisen des Altertums gewusst. Sie sahen das Wasser einerseits als Lebensquell zur Erhaltung des körperlichen Wohlbefindens an, aber andererseits auch als Träger von Krankheitskeimen und von toxischen Stoffen aus der Natur oder der menschlichen Tätigkeit.

Soll das Wasser qualitativ hochwertigen Ansprüchen genügen, dann muss es erst in einen hochreinen Zustand gebracht werden, um es sodann weiter veredeln zu können. Diesen Anforderungen gerecht zu werden, ist vorrangiges Anliegen der Trinkwassergewinnung durch das Sauerstoffanreicherungsgerät.

Leistungsfähigkeit und Sauerstoffzufuhr stehen in direktem Zusammenhang. Ist der Körper unterversorgt, wird man krank und altert schneller. Sauerstoffangereichertes Wasser hilft vor allem Sportlern, ihre Leistungsfähigkeit auf natürliche Weise deutlich zu steigern.

Sauerstoff und reines Wasser sind die beiden wichtigsten Elemente für die Natur und den menschlichen Körper. Das wissen die Sportmediziner und Spitzensportler genau. Ohne ausreichende Zufuhr von Sauerstoff werden die Zellfunktionen geschädigt. Sauerstoff ist übrigens auch der größte Feind der Krebszelle, Sauerstoffmangel bekanntermaßen Ursache vieler Krankheiten.

Die meisten Menschen leiden heute, oft ohne es zu wissen, an Sauerstoffmangel durch Luftverschmutzung, beruflich bedingten Aufenthalt in geschlossenen Räumen, Bewegungsmangel an frischer Luft etc. Hinzukommt, dass der Sauerstoffgehalt im Blut mit zunehmendem Alter ohnehin abnimmt. Wir alle wissen, dass Hochleistungssportler durch Höhentraining ihre Sauerstoffversorgung deutlich steigern. Das kann jetzt auch ganz einfach durch regelmäßiges Trinken von sauerstoffangereichertem Wasser erreicht werden.

Die Einnahme von sauerstoffangereichertem Wasser vermindert unter anderem auch die Auswirkungen des sogenannten Strahlenkaters durch Bestrahlung bei der Krebsbehandlung.

Aufgabe der vorliegenden Erfindung ist es, Wasser bereitzustellen, bei dem die Sauerstoffsättigung jedenfalls höher bzw. die Sauerstoffaufnahme maximal ist, als dies der normalen Sauerstofflöslichkeit des Wassers entspricht.

Diese Aufgabe wird für ein Sauerstoff-Anreicherungsgerät insbesondere für Wasser dadurch gelöst, dass es gekennzeichnet ist durch eine Photonen-Bestrahlungseinrichtung, welche das Wasser vor oder während einer Anreicherung mit Sauerstoff durch eine Einrichtung oder Anreicherung des Wassers mit Sauerstoff mit Photonen bestrahlt, wodurch ein stark erhöhter, langanhaltender Sauerstoffgehalt des Wassers erzielt wird.

Durch das Bestrahlen des Wassers mit Photonen werden in dem Wasser Moleküle zu Quantenübergängen angeregt, die der Energie der Photonen entsprechen oder - bei inelastischer Streuung - niedriger sind als diese. Durch diese Quantenanregung wird eine stark erhöhte Sauerstoffaufnahme des Wassers erzielt, die dadurch lange anhaltend ist, dass auch Quantenübergänge mit niedrigerer Rekombinationswahrscheinlichkeit angeregt werden.

Vorzugsweise handelt es sich bei der Photonen-Bestrahlungseinrichtung um eine Kaltlicht-Photonenquelle, wodurch der Sauerstoffgehalt des Wassers weiter erhöht wird.

Während bei einer herkömmlichen Photonenquelle zusätzlich Infrarotphotonen ausgesandt werden, erfolgt dies bei der Kaltlicht-Photonenquelle nicht. Dadurch wird die Behandlung des Wassers mit sichtbarem Licht nicht durch die Infrarotphotonen gestört, wodurch der Sauerstoffgehalt des Wassers weiter erhöht wird.

Weiterhin vorzugsweise ist das Sauerstoff-Anreicherungsgerät gekennzeichnet durch die Kombination einer Filtereinrichtung mit nachgeschalteter Photonen-Bestrahlung, einer Einrichtung zur Erzeugung eines elektrodynamischen Feldes sowie einer Hochdruckpumpe und anschließender Vorkühlung von einer Einrichtung zur Anreicherung von Sauerstoff im behandelten Wasser.

Ferner vorzugsweise bewirkt die Filtereinrichtung den Austausch von Elektronen zwischen den Wassermolekülen und Verunreinigungsmolekülen, sowie zwischen den Verunreinigungsmolekülen.

Durch diese Filtervorrichtung werden Giftstoffe in harmlose Komponenten umgewandelt, wie z.B. Chlor in Chlorid. Ferner besitzt diese Vorrichtung die Fähigkeit, Chlor bis zu 10 ppm zu eliminieren und Schwermetalle inklusive Cadmium, Blei, Chrom, Eisen, Quecksilber etc. wesentlich zu reduzieren. Des weiteren wird das Wasser von Bakterien, Pilzen, Algen und Schimmel durch einen natürlichen Prozess gereinigt. Dies geschieht durch Austausch der Elektronen, wodurch blitzartig ein elektrisches Feld entsteht, welches Mikroorganismen nicht überleben können.

Bevorzugt erzeugt die Einrichtung zur Erzeugung eines elektrodynamischen Feldes niederfrequent pulsierende elektrische und magnetische Felder.

Wasser besitzt, neben vielen anderen, die Eigenschaft, bei Raumtemperatur flüssig zu sein, obwohl gleichzeitig seine Molekülmasse sehr gering ist. Dies hat seine Ursache darin, dass sich die Wassermoleküle entsprechend ihrer spezifischen magnetischen Eigenarten zu den verschiedensten Großverbänden, sogenannten Clustern zusammenschließen. Im Mikro- wie Makrokosmos werden die kleinsten Körperteilchen stetig rhythmisch bewegt; deshalb erzeugen auch die Wassermoleküle durch ihre Schwingungen innerhalb des jeweiligen Großverbandes ein elektrodynamisches Feld. Durch diese Stufe wird nun das Wasser durch ein rhythmisch schwingendes elektrodynamisches Feld behandelt, so dass sich sofort alle Moleküle nach den Eigenschaften dieses Feldes ausrichten. Gleichzeitig entwickelt sich eine Austauschwirkung zwischen dem elektrodynamischen Feld und den Molekül-Großverbänden. Es kommt dadurch zu durchgreifenden Veränderungen in der Zusammensetzung des Molekül-Großverbandes und somit auch zu Änderungen der physikalischen Werte - beispielsweise stellt sich eine Polarisation der gelösten Mineralsalze ein. Der elektrische Leitwert wird abgesenkt, eine mineralische Verdichtung wird verhindert, die Kristallgitter-Strukturen der Mineralien verändert etc. Mit dieser elektromagnetischen Behandlung werden sämtliche im Wasser befindlichen Informationen eliminiert und positive Schwingungen eingebracht.

Weiterhin bevorzugt erzeugt die Einrichtung zur Erzeugung eines elektrodynamischen Feldes ein statisches Magnetfeld.

Ein solches Magnetfeld ist mit einem Vektorpotential verbunden. Diesem Vektorpotential wird das Wasser ausgesetzt. Ein Vektorpotential besteht gewöhnlich aus zwei Teilen, von denen ein Teil zur Bildung eines Magnetfeldes beiträgt und ein Teil, das rotationsfreie Vektorpotential, kein Magnetfeld verursacht. Während das Magnetfeld die Wellenfunktionen nur zusammendrückt, wird durch das Vektorpotential das kein Magnetfeld verursacht, ein Verzerrung der Wellenfunktion bewirkt, wodurch Energieniveaus gegeneinander verschoben werden, so dass eine Umbesetzung der Energieniveaus stattfindet. Gerät das Wasser wieder aus dem Vektorpotential hinaus, werden die Wellenfunktionen wieder entzerrt, so dass die nunmehr besetzten Energieniveaus nach oben wandern, wobei eine geringere Rekombinationswahrscheinlichkeit vorherrscht, die vorher durch das Vektorpotential vergrößert worden war. Durch diese Umbesetzung von elektronischen Energieniveaus werden die biologischen Eigenschaften von Wasser verbessert.

Ferner bevorzugt erzeugt die Einrichtung zur Erzeugung eines elektrodynamischen Feldes ein magnetfeldfreies Vektorpotential. Bei dieser bevorzugten Ausführungsform wird das magnetfeldfreie Vektorpotential, welches die Umbesetzung von Energieniveaus verursacht, nicht durch das Magnetfeld überlagert, so dass ein noch besserer Effekt stattfindet.

Vorzugsweise verwirbelt die Einrichtung zur Anreicherung von Sauerstoff im behandelten Wasser das in einem elektrischen Feld intensiv mit Sauerstoff in Kontakt gebrachte Wasser. Durch diese Methode wird besonders viel Sauerstoff in das Wasser eingebracht.

Die Aufgabe wird ebenfalls gelöst durch ein Verfahren zur Sauerstoffanreicherung von insbesondere Wasser, gekennzeichnet durch eine Photonen-Bestrahlung des Wasser vor oder während einer Anreicherung mit Sauerstoff, wodurch ein stark erhöhter, lang anhaltender Sauerstoffgehalt des Wassers erzielt wird.

Vorzugsweise werden bei der Photonen-Bestrahlung Kaltlicht-Photonen verwendet, wodurch der Sauerstoffgehalt des Wassers weiter erhöht wird.

Weiterhin vorzugsweise erfolgt eine Filterung des Wassers vor der Photonen-Bestrahlung, ein Anlegen eines elektrodynamischen Feldes an das Wasser, ein Pumpen des Wassers mit hohem Druck und ein Vorkühlen des Wassers vor der Anreicherung mit Sauerstoff.

Bevorzugt wird durch die Filterung der Austausch von Elektronen zwischen den Wassermolekülen und Verunreinigungsmolekülen sowie zwischen den Verunreinigungsmolekülen bewirkt.

Ebenfalls bevorzugt wird das an das Wasser angelegte elektrodynamische Feld durch ein niederfrequent pulsierendes elektrisches und magnetisches Feld verkörpert.

Weiterhin bevorzugt wird das an das Wasser angelegte elektrodynamische Feld durch ein statisches Magnetfeld verkörpert.
Vorzugsweise wird das an das Wasser angelegte elektrodynamische Feld durch ein magnetfeldfreies Vektorpotential verkörpert.

Ebenfalls vorzugsweise wird das Wasser in einem elektrischen Feld intensiv mit Sauerstoff in Kontakt gebracht und verwirbelt.

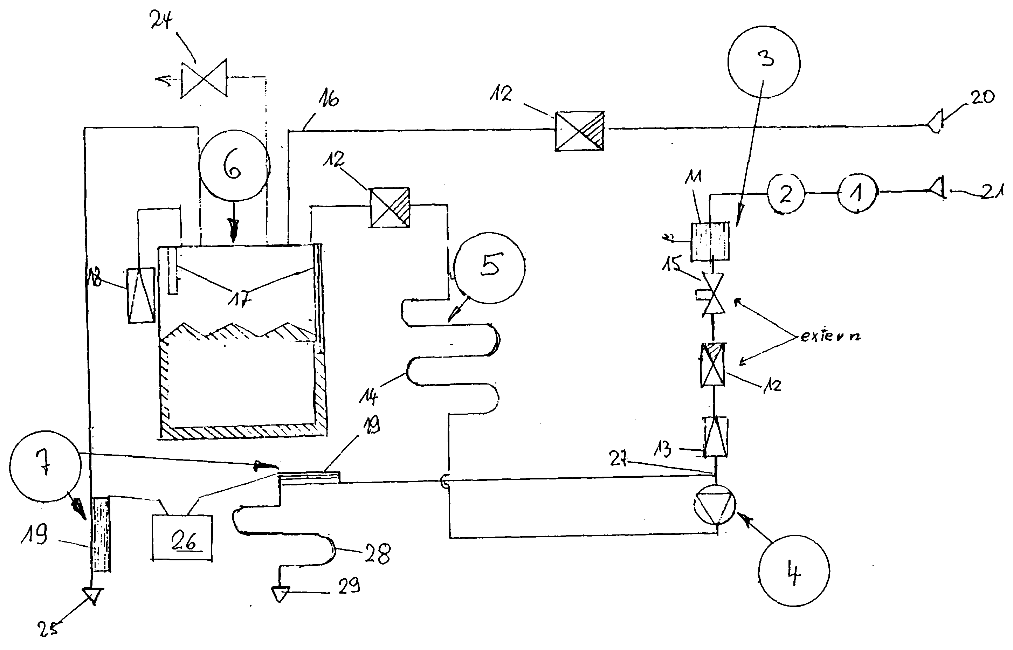

Ein besonders bevorzugtes Ausführungsbeispiel des Sauerstoffanreicherungs-Gerätes wird anhand der Figur beschrieben, welche eine schematische Darstellung des Sauerstoffanreicherungs-Gerätes darstellt.

Der in der Figur dargestellte Wasserfilter 1 arbeitet nach der physikalischen Methode des Elektronenaustausches. Dieser Elektronenaustausch wird durch das Anlegen eines kombinierten elektrischen und magnetischen Feldes bewirkt.

Anschließend erfolgt in einer Stufe 2 eine Photonenbelichtung mittels einer Photonenquelle. Nach dem Studium der Physikochemie des Photonenfeldes im Wasser wurde klar, dass jede chemische Reaktion die Anregung mindestens einer der reagierenden Partner erfordert. Ziel der Photonenbelichtung ist es deshalb, eine möglichst definierte Lichtspeicher-Intensität zu erhalten, weil die Frequenzkombination, Polarisations- und Ausbreitungsrichtung der Photonen darüber entscheidet, ob eine bestimmte Reaktion stattfindet oder unterdrückt wird (z.B. biologische Stabilität, Keimfreiheit, Aktivierung von Biomolekülen etc.). Denn, je nach Frequenz, könnten sie Translations-, Rotations-, Schwingungs- und elektronische Zustände von Molekülen anregen. Je mehr Bedingungen an diese Photonenkopplung zu stellen sind, um so weniger stören andere Photonenfelder selbst stärkster Intensität.

In einer dritten Stufe erfolgt eine elektrodynamische Behandlung 3 nach den in der Beschreibungseinleitung erwähnten Gesichtspunkten.

Anschließend erfolgt nach einer Hochdruckpumpe 4 eine Kühlung 5. Trinkwasser entspricht höchsten Qualitätsansprüchen dann, wenn es optimal temperiert ist. Seine Idealtemperatur beträgt +4°C. Bei dieser Temperatur ist auch sein Bindevermögen für die Aufnahme von Sauerstoff am höchsten.

Daran schließt sich die eigentliche Sauerstoffanreicherung 6 an, und zwar nachdem in den vorgehenden Stufen die notwendigen Voraussetzungen für eine Anreicherung des Trinkwasser mit medizinisch reinem Sauerstoff geschaffen wurden. In einem Carbonator wird das in einem elektrischen Feld intensiv mit Sauerstoff in Kontakt gebrachte Wasser verwirbelt und mit dem Sauerstoff versetzt.

Sauerstoff beinhaltet eine starke elektrische Komponente, welche polaritäts-spezifisch, aus Gründen der biologischen Verträglichkeit, unbedingt beachtet werden muss. Sauerstoffanreicherung findet statt durch eine speziell hierfür entwickelte Methode. Es werden Volumen eingebunden, wenn O₂ in einer Größenordnung von ca. 50 bis 60 mg pro Liter gemessen wird.

Nachdem das Gerät über einen Schlauch mit der Wasserleitung verbunden ist und die Sauerstofflasche geöffnet wurde, wird der Sprühturm mit Sauerstoff gefüllt und die Druckpumpe drückt das Wasser zunächst durch den Filter, ehe es durch den Kühlblock gekühlt in dem Sprühturm mit Sauerstoff angereichert wird. Von da aus wird das angereicherte Wasser durch den Entnahmehahn geführt und dem Verbraucher zur Verfügung gestellt. Es enthält ein absolut reines, mit Sauerstoff hochangereichertes, keimfreies und mit positiven Informationen beladenes Wasser.

Zur optimalen Anreicherung wird in diesem Gerät ein Sprühturm aus nicht oxidierendem Stahl verwendet, der für einen Druck über 10 bar ausgelegt ist. Dieser Turm hat zwei Eingänge und einen Ausgang. Der Sauerstoff wird durch Eingang 1 mit einem Druck von 3, 5 bar in den Turm gedrückt. Durch Eingang 2 wird nunmehr Wasser in einem Druck von 6 bar über einen Sprühkopf zerstäubt und in den Turm gepresst. Wasser und Sauerstoff verbinden sich molekularphysikalisch. Durch den Ausgang wird das angereicherte Wasser nach Betätigen des Abfüllhahns dem Verbrauch zugeführt.

Schließlich werden durch spezielle Messelektroden 7 der 02 Wert, pH-Wert, pH₂-Wert, pH₀-Wert und Energiewert (Mikrowatt) in einer Messdatensammelstelle gespeichert, über eine Digitalanzeige angezeigt und über einen Protokolldrucker ausgedruckt.

Im übrigen stehen in der Schemazeichnung die Bezugsziffern 11 für eine elektrodynamische Felderzeugungsanordnung, 12 für Rückschlagventile (extern), 13 für eine Wassermangelsicherung, 14 für eine Vorkühlschlange, 15 für einen Druckminderer (extern), 16 für einen O₂-Einlass, 17 für Niveau-Regler-Elektronen, 18 für einen Niveauregler, 19 bzw. 7 für eine Messelektrode, 21 bezeichnet den Wasserzufluss.

Die 0₂-Zufuhr wird durch einen 0₂-Flaschendruckminderer auf 4 bar eingestellt und ebenso wie der Wasserzulauf durch Rückschlagventile gesichert. Der Wasserzufluss 21 wird durch den Druckminderer auf 2,5 bar geregelt. Die Wassermangel-Sicherung 13 gewährt einen Mindestdruck für die Hochdruckpumpe 4 von 2 bar.

Die Elektroden 17 dienen zur Niveauregelung des Wassers im Behälter 22, der durch ein Sicherheits-Ablassventil 24 gegen Überdruck gesichert ist. Die Messelektroden 19 sind nahe dem Auslas 25 für das 0₂ angereicherte Wasser vorgesehen und messen den O₂-Gehalt, den pH-Wert, den pH₂-Wert, den pH0-Wert und den Mikrowattwert, und werden sowohl laufend digital angezeigt als auch graphisch aufgezeichnet und ausgedruckt. Ein Speicher 26 sammelt die ermittelten Werte. Über einen Anschluss 27 wird der Wasserzufluss von der Hochdruckpumpe 4 angezapft und der Zustand des Wassers an dieser Verfahrensstelle als sogenanntes Stillwasser mittels einer Messelektrode 19 gemessen. Der daraus resultierende Wasseranteil wird nach der Kühlung 28 durch einen Auslas 19 abgezapft.

## Patentansprüche

1. Sauerstoff-Anreicherungsgerät insbesondere für Wasser, **gekennzeichnet durch** eine Photonen-Bestrahlungseinrichtung (2), welche das Wasser vor oder während einer Anreicherung mit Sauerstoff durch eine Einrichtung (6) zur Anreicherung des Wassers mit Sauerstoff mit Photonen bestrahlt, wodurch ein stark erhöhter, lang anhaltender Sauerstoffgehalt des Wassers erzielt wird.

2. Sauerstoff-Anreicherungsgerät nach Anspruch 1, **dadurch gekennzeichnet**, daß es sich bei der Photonen-Bestrahlungseinrichtung (2) um eine Kaltlicht-Photonenquelle handelt, wodurch der Sauerstoffgehalt des Wassers weiter erhöht wird.

3. Sauerstoff-Anreicherungsgerät nach Anspruch 1 oder 2, **gekennzeichnet durch** die Kombination einer Filtereinrichtung (1) mit nachgeschalteter Photonen-Bestrahlung (2), einer Einrichtung (3) zur Erzeugung eines elektrodynamischen Feldes sowie einer Hochdruckpumpe (4) und anschließender Vorkühlung (5) vor einer Einrichtung (6) zur Anreicherung von Sauerstoff in behandeltem Wasser.

4. Sauerstoff-Anreicherungsgerät nach Anspruch 3, **dadurch gekennzeichnet**, dass die Filtereinrichtung (1) den Austausch von Elektronen zwischen den Wassermolekülen und Verunreinigungsmolekülen, sowie zwischen den Verunreinigungsmolekülen bewirkt.

5. Sauerstoff-Anreicherungsgerät nach Anspruch 3 oder 4, **dadurch gekennzeichnet**, dass die Einrichtung (3) zur Erzeugung eines elektrodynamischen Feldes niederfrequent pulsierende elektrische und magnetische Felder erzeugt.

6. Sauerstoff-Anreicherungsgerät nach Anspruch 3 oder 4, **dadurch gekennzeichnet**, dass die Einrichtung (3) zur Erzeugung eines elektrodynamischen Feldes ein statisches Magnetfeld erzeugt.

7. Sauerstoff-Anreicherungsgerät nach Anspruch 3 oder 4, **dadurch gekennzeichnet**, dass die Einrichtung (3) zur Erzeugung eines elektrodynamischen Feldes ein magnetfeldfreies Vektorpotential erzeugt.

8. Sauerstoff-Anreicherungsgerät nach einem der Ansprüche 3 bis 7, **dadurch gekennzeichnet**, dass die Einrichtung (6) zur Anreicherung von Sauerstoff im behandelten Wasser das in einem elektrischen Feld intensiv mit Sauerstoff in Kontakt gebrachte Wasser verwirbelt.

9. Verfahren zur Sauerstoff-Anreicherung von insbesondere Wasser, gekennzeichnet durch eine Photonen-Bestrahlung des Wassers vor oder während einer Anreicherung mit Sauerstoff, wodurch ein stark erhöhter, lang anhaltender Sauerstoffgehalt des Wassers erzielt wird.

10. Verfahren nach Anspruch 9, dadurch gekennzeichnet, dass bei der Photonen-Bestrahlung Kaltlicht-Photonen verwendet werden, wodurch der Sauerstoffgehalt des Wassers weiter erhöht wird.

11. Verfahren nach Anspruch 9 oder 10, gekennzeichnet durch eine Filterung des Wassers vor der Photonen-Bestrahlung, ein Anlegen eines elektromagnetischen Feldes an das Wasser, ein Pumpen des Wassers mit hohem Druck und ein Vorkühlen des Wassers vor der Anreicherung mit Sauerstoff.

12. Verfahren nach Anspruch 11, dadurch gekennzeichnet, dass durch die Filterung der Austausch von Elektronen zwischen den Wassermolekülen und Verunreinigungsmolekülen, sowie zwischen den Verunreinigungsmolekülen bewirkt wird.

13. Verfahren nach Anspruch 11 oder 12, dadurch gekennzeichnet, dass das an das Wasser angelegte elektrodynamische Feld durch ein niederfrequent pulsierendes elektrisches und magnetisches Feld verkörpert wird.

14. Verfahren nach Anspruch 11 oder 12, dadurch gekennzeichnet, dass das an das Wasser angelegte elektrodynamische Feld durch ein statisches Magnetfeld verkörpert wird.

15. Verfahren nach Anspruch 11 oder 12, dadurch gekennzeichnet, dass das an das Wasser angelegte elektromagnetische Feld durch ein magnetfeldfreies Vektorpotential verkörpert wird.

16. Verfahren nach einem der Ansprüche 11 bis 15, dadurch gekennzeichnet, dass das Wasser in einem elektrischen Feld intensiv mit Sauerstoff in Kontakt gebracht und verwirbelt wird.
